# EUROPÄISCHE PATENTANMELDUNG

(11) **EP 1 109 374 A2**
(43) Veröffentlichungstag der Anmeldung: **20.06.2001**
(21) Anmeldenummer: 99124727.1
(22) Anmeldetag: 13.12.1999
(51) Int. Cl.: H04L 29/06, G06F 9/46

(54) **Verfahren und Vorrichtung zur Durchführung von Netzwerkoperationen**

(71) Anmelder: TELEFONAKTIEBOLAGET LM ERICSSON (publ), 126 25 Stockholm (SE)
(72) Erfinder: Baucke, Stephan, Research Dept., Ericsson Allee 1, 52134 Herzogenrath (DE); Zmuda, Margarethe, 52134 Herzogenrath (DE)
(74) Vertreter: Mohsler, Gabriele

(57) **Zusammenfassung**

Die Erfindung betrifft ein Verfahren und eine Vorrichtung zu einer schnellen Durchführung von Netzwerkoperationen über ein Netzwerk mit hohen Verzögerungszeiten mit einem Modul für eine Bearbeitung von Systemaufrufen einer Anwendungsebene und für eine Auslösung von Netzwerkoperationen einer Netzwerkebene. In diesem Modul wird eine Unterscheidung zwischen einem blockierenden und einem nicht-blockierenden Ausführungsmodus durchgeführt. Ein nicht-blockierender Ausführungsmodus bedeutet, daß der betrachtete Systemaufruf als Ergebnis einen logischen Wert an die Anwendung zurückliefert, der besagt, ob der Systemaufruf erfolgreich durchgeführt wurde. In diesem Fall sieht die Erfindung vor, beim Aufruf eines nicht-blockierenden Systemaufrufes unmittelbar einen logischen Wert an die Anwendung zu liefern ohne auf das tatsächliche Resultat der in der kommunizierenden Partnerinstanz durchgeführten und dem Systemaufruf entsprechenden Operation gewartet zu haben. Die Behandlung der Resultate der tatsächlich durchgeführten Operation erfolgt zu einem späteren Zeitpunkt.

## Beschreibung

Die Erfindung betrifft ein Verfahren und eine Vorrichtung zu einer schnellen Durchführung von Netzwerkoperationen über ein durch hohe Verzögerungszeiten charakterisiertes Netzwerk.

Beispielhaft für ein Netzwerk mit hohen Verzögerungszeiten steht das GSM (Global System for Mobile Communication) Netzwerk. Das GSM Netzwerk ist ein digitales Mobilfunknetz, bei dem die nutzbare Datenübertragungsrate 9.6 kBit/s pro Kanal beträgt. Im Vergleich zu heutigen Festnetzen, wie beispielsweise dem ISDN (Integrated Service Digital Network), dessen Übertragungsrate 64kBit/s erreicht, ist die Datenrate von GSM gering. Daher beeinflusst eine GSM-Verbindung in einer heterogenen Netzwerkverbindung, das heißt in einer Verbindung, die über mindestens zwei verschiedene Netzwerke verläuft, sehr stark den absoluten Durchsatz der gesamten Verbindung. Dies stellt sich als besonders problematisch dar, wenn eine Verbindung von einem GSM-Benutzer zu einem Internet Service Provider (ISP) zwecks eines sogenannten Web-Surfens oder/und Herunterladen von Daten aus dem Internet aufgebaut ist. In diesem Szenario stellt die GSM-Verbindung den kritischen Teil der Verbindung im Bezug auf die effektive Übertragungsrate dar.

Der Austausch von Informationen zwischen den kommunizierenden Partnerinstanzen, in diesem Fall zwischen dem GSM-Endgerät und dem Internet Service Provider (ISP), basiert auf einem für die Internet Anwendungen standardisierten Protokollstapel, dem sogenannten TCP/IP (Transmission Control Protokoll/Internet Protokoll) Protokollstapel. Dieser Protokollstapel besteht aus fünf Protokollschichten, im weiteren auch als Schichten bezeichnet. Die oberste Schicht, die Anwendungsschicht beinhaltet die Anwendungen, die von einem Benutzer direkt genutzt werden, beispielsweise gehört das Surfen im Internet zu einer möglichen dem Benutzer zur Verfügung stehenden Anwendung. Direkt unter der Anwendungsschicht ist eine Transportschicht mit den die Aufgaben dieser Schicht erfüllenden Transportprotokollen, wie beispielsweise das TCP (Transmission Control Protokoll) oder das UDP (User Datagramm Protokoll) angeordnet. Das Internet Protokoll (IP) als Beispiel bildet die Netzwerkschicht. Die zwei untersten Schichten, die Sicherungsschicht und die Bitübertragungsschicht, können unter dem Begriff netzwerkorientierte Schicht zusammengefaßt werden, denn sie sind in Abhängigkeit von dem darunterliegenden Netz spezifisch definiert.

Die Aufgabe einer Schicht besteht unter anderem in der Aufarbeitung der empfangenen oder der zu übertragenden Daten. Hierbei erfolgt die Kommunikation einer Schicht ausschließlich mit den direkt benachbarten Schichten. Die zur Übertragung bereitgestellten Daten werden von einer Schicht zu der direkt darunterliegenden Schicht übergeben. Hierbei wird unter anderem eine Formatierung der Daten vorgenommen. Häufig überschreiten nämlich die Daten der Anwendungsschicht die Größe der Pakete, die über eine physikalische Verbindung übertragen werden können. Aus diesem Grund erfolgt eine Aufteilung einer Nachricht in kleinere Datenpakete, die aufeinanderfolgend für eine Übertragung angeordnet werden. Die Aufteilung der Daten ist ein Bestandteil der Formatierung. Die Formatierung der Daten wird auf jeder Protokollschicht durchgeführt. Die Formatierung der Daten beinhaltet insbesondere das Hinzufügen der für jede Protokollschicht charakteristischen Kontrolldaten. Meistens werden die Kontrolldaten am Anfang eines Datenpaketes in Form des sogenannten Kopffeldes oder/und am Ende in Form des sogenannten Endefeldes anhängt. Die tatsächlichen Daten sind in dem Nutzdatenfeld enthalten. Diese Kontrolldaten sind für jede Schicht charakteristisch definiert und standardisiert, denn nur auf diese Weise kann eine einheitliche Kommunikation zwischen zwei Partnerinstanzen gewährleistet werden. Für die vorliegende Erfindung sind bestimmte Kontrolldaten des TCP von Bedeutung.

Das Transportprotokoll TCP leistet einen zuverlässigen Transportdienst für einen Bytestrom zwischen zwei Kommunikationspartnern. Zuverlässigkeit ist hier im Sinne von Fehlerfreiheit, Reihenfolgetreue und Schutz vor Datenverlusten und Duplikaten zu verstehen. Der zu übertragende Bytestrom, der von der Anwendungsschicht an die TCP-Schicht übergeben wird, wird von dem TCP in Segmente unterteilt, welche dann als IP-Datagramme übertragen werden.

Ein IP-Datagramm bezeichnet ein Datenpaket, das nach den Regeln des IP-Protokolls formatiert wird. Die Eigenschaft der Datagramme ist, daß der Datenaustausch, der durch den Einsatz der Datagramme realisiert wird, nicht zuverlässig ist. Somit wird vom IP keine Garantie gegeben, daß ein Paket in der Tat zu einem Empfänger geliefert wird. Ebenfalls können IP-Datagramme in der Reihenfolge vertauscht oder dupliziert beim Empfänger ankommen. In diesem Konzept ist es aber die Aufgabe von TCP, die fehlerhafte Übertragung zu erkennen und die aufgetretenen Fehler zu beheben. Die IP-Datagramme werden weiterhin aufgrund des Hierarchieprinzips der direkt darunterliegenden Schicht übermittelt.

Zur Realisierung der gestellten Aufgaben wurde in das TCP eine Reihe aufwendiger Mechanismen eingebaut. Auf die einzelnen Mechanismen, wie zum Beispiel den Fenstermechanismus, das kumulative Bestätigungsschema, den sogenannten Slow-Start-Algorithmus oder einen Algorithmus zur Vermeidung von Stauungen, den sogenannten Congestion Avoidance Algorithmus wird hier nicht näher eingegangen. Die genaue Beschreibung dieses Verfahrens kann aus "TCP/IP. Illustrated, Volume 1" von W. Richard Stevens entnommen werden.

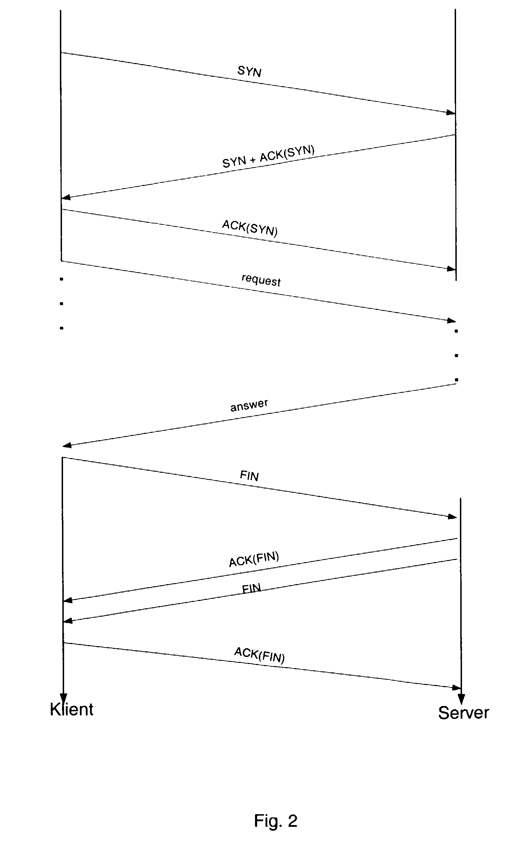

Ein wichtiger Mechanismus, der an dieser Stelle genauer betrachtet wird, hängt mit dem Verbindungsaufbau bei TCP zusammen. Bei einem Aufbau einer Verbindung verwendet TCP den sogenannten Dreiweg-Algorithmus, der den Austausch von fest definierten Signalisierungsinformationen sicherstellt. Der Sachverhalt kann aus der Figur 2 entnommen werden. Die kommunizierenden Partner werden unter den Namen Klient und Server gefasst. Hierbei ist der Klient die Einheit, die die Kommunikation initiiert und der Server die jenige, die die Verbindung entgegennimmt. Insgesamt wird für den Verbindungsaufbau zwischen dem Klient und dem Server ein Austausch von drei Nachrichten erforderlich. Mit Versenden der ersten Nachricht werden die anfänglichen Sequenznummern zwischen den kommunizierenden Partnern vereinbart. Die Datenpakete, die ausgetauscht werden, sind durch eine eindeutige Nummer, die sogenannte Sequenznummer identifiziert. Zu diesem Zweck ist in einem Header eines TCP-Datenpakets ein Feld vorgesehen, das zur Synchronisation der Sequenznummern beim Verbindungsaufbau dient, das sogenannte SYN-Flag, in Figur 2 als SYN bezeichnet. Ist der Server bereit, die Verbindung entgegenzunehmen, antwortet er mit einer Nachricht, die das gesetzte SYN-Flag und eine Bestätigung für die anfängliche Sequenznummer des Klients enthält ACK(SYN). Schließlich sendet der Klient eine Nachricht mit der Bestätigung für die SYN-Nachricht des Servers ACK(SYN). Nach dem Austausch der drei Nachrichten ist die Verbindungsaufbauphase abgeschlossen. Im nächsten Schritt erfolgt die Übertragung der Daten, somit die tatsächliche Kommunikation, die durch einen Verbindungsaufbau abgeschlossen wird. Der Verbindungsabbau benötigt einen Austausch von vier Nachrichten. Zuerst wird eine Nachricht vom Klient an den Server mit dem gesetzten FIN-Flag (FIN), das die Schließung der Verbindung in die gesendete Richtung bewirkt, verschickt. Auf diese Weise initiiert der Klient den Verbindungsabbau. Der Server bestätigt den Empfang dieser Nachricht mit ACK(FIN) und leitet ebenfalls die Schließungsphase ein. Zu diesem Zweck verschickt dieser die Nachricht mit dem gesetzten FIN-Flag (FIN) an den Klient und dieser antwortet mit ACK(FIN). Nach diesem Nachrichtensaustausch ist der Verbindungsabbau beendet.

Insgesamt werden für den Verbindungsaufbau und -abbau minimal sieben Nachrichten, oder dreieinhalb sogenannte RTT (Round Trip Time) benötigt. Ein RTT bezeichnet eine Zeitspanne zwischen dem Verschicken einer Anfragenachricht und dem Empfang der dazugehörigen Antwortnachricht. Diese Zeit variiert entsprechend in Abhängigkeit von der Übertragungsrate des zugrundeliegenden Netzes.

Viele Anwendungen basieren jedoch auf einer einfachen Interaktion zwischen den kommunizierenden Partnerinstanzen. Beispielhaft für eine einfache Interaktion steht die sogenannte Transaktion, bei der ein Klient eine Anfragenachricht an den Server verschickt und der Empfänger mit einer Antwortnachricht dem Sender die angeforderten Informationen zusendet. Diese Art von Datenaustausch ist beispielsweise im Internet zu finden, der durch ein transaktionsorientiertes Verkehrsmuster des World Wide Web Protokolls charakterisiert ist. Die Transaktionen im Internet werden vorwiegend aufgrund des verwendeten HTTP Protokolls veranlaßt.

Bei der derzeit eingesetzten Protokollversion HTTP/1.0, RFC 1945 "Hypertext Transfer Protocol -- HTTP/1.0" von T. Berners-Lee, R. Fielding und H. Frystyk, May 1996, wird für jedes angeforderte Objekt einer WWW-Seite, zum Beispiel ein Textblock oder ein Bild, zunächst eine TCP-Verbindung aufgebaut. Erst dann wird eine Transaktion durchgeführt. Das heißt der Sender sendet eine Anfragenachricht, die sogenannte Request Message an den Empfänger und dieser verschickt die angeforderten Daten mit einer Antwortnachricht, mit der sogenannten Response Message. Anschließend wird die TCP-Verbindung wieder geschlossen. Dieser Sachverhalt hat einen erheblichen Einfluss auf die gesamte Leistung einer Sitzung, wenn für jedes Objekt, sei es nur ein kleines Bild-Objekt, eine explizite Verbindung aufgebaut werden muss, die auf dem Dreiweg-Algorithmus basiert, der wiederum mindestens drei Nachrichten für den Aufbau und vier für den Abbau benötigt.

Die Aufgaben, die das TCP zu erfüllen hat, weisen bereits darauf hin, daß TCP für Netzwerkgegebenheiten konzipiert wurde, die durch schnelle Datenübertragung und durch geringe Übertragungsstörungen charakterisiert sind, wie dies bei den drahtgebundenen Datennetzen der Fall ist. Diese Annahmen werden jedoch im GSM nicht erfüllt und das ist eine Ursache für eine nicht optimale Funktionalität von TCP in dieser Art von Netzen. Eine Reihe von Dokumenten stellt Konzepte dar, die sich mit Optimierung von TCP für Netze mit geringer Übertagungskapazität auseinandersetzen. Im folgenden wird beispielhaft eine Lösung vorgestellt.

In "T/TCP - TCP Extensions for Transactions Functional Specification" RFC 1644 von R. Braden wird ein Konzept vorgestellt, mit dem insbesondere die Verbindungsaufbauphase optimiert wird. Zu diesem Zweck werden Informationen bezüglich der Verbindung zu einem bestimmten Server zwischengespeichert. Auf diese Weise wird der komplette Dreiweg-Algorithmus ausschließlich beim erstmaligen Verbindungsaufbau zu einem Server durchgeführt und die Informationen bezüglich der Konfiguration der Verbindung, die während dieses Verbindungsaufbaus vereinbart werden, werden zwischengespeichert. Bei nachfolgenden Zugriffen zu dem gleichen Server wird die vollständige Verbindungsaufbauphase umgangen indem die Konfiguration aus den gespeicherten Informationen entnommen wird.

Der Nachteil dieser Lösung ist jedoch eine nicht vorhandene Transparenz bezüglich der Anwendungen. Die Realisierung dieses Konzeptes erfordert nämlich die Veränderung von Systemaufrufen in einer Anwendung. Beispielsweise wird ein schnellerer Verbindungsaufbau erzielt bei Ersetzung von den Systemaufrufen "connect" und "send" durch "sendto". Diese Systemaufrufe sind Bestandteile der sogenannten Socket-Programmierschnittstelle, deren genauere Funktionalität aus der unten aufgeführten Beschreibung zu entnehmen ist.

Demgemäß ist es die Aufgabe der vorliegenden Erfindung eine Methode und eine Vorrichtung zu schaffen, die eine effiziente Durchführung von Transaktionen zwischen zwei kommunizierenden Einheiten über eine Übertragungsstrecke, die durch hohe Verzögerungszeiten charakterisiert ist, realisiert.

Dies wird erfindungsgemäß gelöst durch die Lehre des Patentanspruches 1 und durch die Lehre des Patentanspruches 16.

Vorteilhaft erweist sich hierbei, daß die Optimierung der Durchführung der Transaktionen einen unmittelbaren Einfluss auf die Leistungsfähigkeit der Anwendungen hat, denn durch eine schnelle Durchführung der Transaktionen wird eine stabilere Arbeitsweise von verzögerungsempfindlichen Anwendungen gewährleistet.

Ein weiterer Vorteil besteht in der Unabhängigkeit der Realisierung der Erfindung sowohl von der Anwendungsschicht als auch von der Transportschicht, denn es wird gewährleistet, daß das Einbinden der Erfindung für die beiden Schichten transparent bleibt.

Weitere vorteilhafte Ausgestaltungen der Erfindung ergeben sich aus den Patentansprüchen 2 bis 15 und den Patentansprüchen 17 und 18.

Im folgenden wird die Erfindung anhand von Ausführungsbeispielen und Figuren näher erläutert.

Folgende Figuren zeigen:
Fig.1: Ablaufdiagramm des erfindungsgemäßen Verfahrens,
Fig.2: Schematische Darstellung des 3-Wege Algorithmus,
Fig.: Darstellung eines Verbindungsaufbaus gemäß
   3a) des Stands der Technik
   3b) der Erfindung, und
Fig.4: Darstellung einer beispielhaften Implementierung

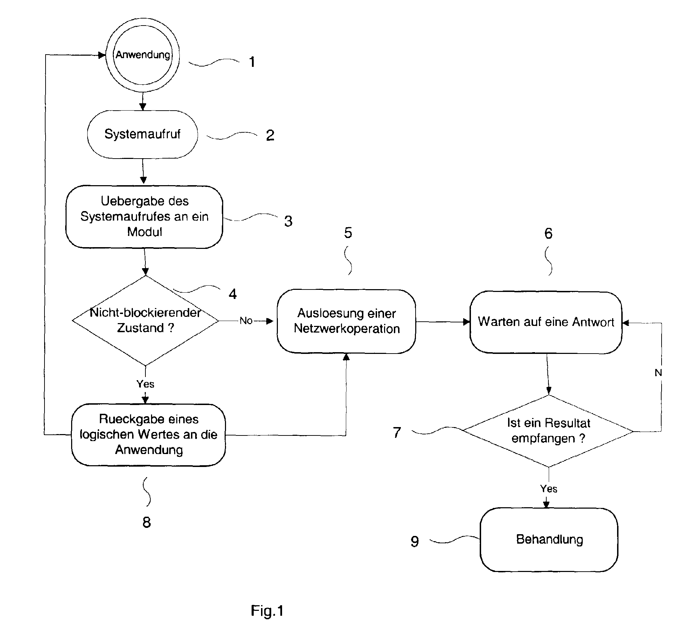

Im folgenden wird die Erfindung anhand der Figur 1 und des Patentanspruches 1 erläutert.

Gemäß Figur 1 ruft eine Anwendung 1 einen Systemaufruf 2 auf. Dieser wird im Schritt 3 einem Modul, einem sogenannten Pipelinemodul übergeben. Die erste Aufgabe des Pipelinemoduls besteht in einer Ermittlung des Systemaufrufes 4 bezüglich seines Ausführungsmodus, das heißt ob es sich um einen blockierenden oder einen nicht-blokierenden Systemaufruf handelt. Wenn das Pipelinemodul den Systemaufruf als einen blockierenden Aufruf erkennt, dann wird auf eine bekannte Weise fortgefahren. Das heißt eine Netzwerkoperation wird ausgelöst 5 und die aufrufende Anwendung bleibt blockiert 6 bis ein Resultat der ausgelösten Netzwerkoperation zurückgeliefert wird 7. Der blockierende Zustand der Anwendung ist in der Figur 1 dadurch erkennbar, daß aus dem blockierenden Ausführungsmodus kein Pfeil zu der Anwendung zurückführt, sondern es wird ausschließlich eine Netzwerkoperation ausgelöst 5. Im Falle eines nichtblockierenden Systemaufrufes wird an die Anwendung unmittelbar ein logischer Wert zurückgegeben 8. Mit diesem Schritt wird ermöglicht, daß die Anwendung mit den folgenden Programmschritten fortfährt, ohne, daß diese blockiert bleibt, um das Resultat des bei der Partnerinstanz tatsächlich durchgeführten Systemaufrufs abzuwarten. Der Ausdruck unmittelbar bezieht sich hiermit auf die Zeit, die gebraucht wird, um den logischen Wert in der die Netzwerkoperation initiierenden Einheit zu ermitteln. Da dies in dieser Einheit lokal gemacht wird, ist diese Zeit erheblich geringer als die Zeit, die für die Übertragung der Netzwerkoperation über ein Netzwerk, für die Durchführung des Systemaufrufes in der Partnerinstanz und für die Lieferung und Empfang des Resultates benötigt wird.

Mit der unmittelbaren Rückgabe des logischen Wertes im Falle eines nicht-blockierenden Ausführungsmodus erfolgt ebenfalls die Auslösung einer Netzwerkoperation 5. Dies geschieht entweder kurz vor der Rückgabe des logischen Wertes oder direkt danach. Bei den nicht-blokierenden Systemaufrufen wird in dem Pipelinemodul ebenfalls auf das Resultat der ausgelösten Netzwerkoperation gewartet 6, dies geschieht jedoch unabhängig von der laufenden Anwendung. Nach dem Empfangen eines Resultates wird dieses untersucht und entsprechend bezüglich des Ausführungsmodus und des zurückgelieferten Wertes behandelt 9.

Im folgenden wird beispielhaft die Behandlung der empfangenen Resultate dargestellt.

Zuerst wird ein empfangenes Resultat auf den Ausführungsmodus untersucht. Wenn es sich um ein Resultat eines nichtblockierenden Systemaufrufes handelt, dann bedeutet das, daß die Anwendung zu diesem Zeitpunkt läuft und nicht blockierend auf ein Resultat wartet. Aus diesem Grund wird das empfangene Resultat abgespeichert. Als nächstes wird das Resultat bezüglich seines Wertes untersucht, das heißt, ob es sich um ein negatives oder ein positives Ergebnis handelt. Beim Eintreten eines negativen Resultates wird dies beispielsweise mittels eines speziellen Vermerks markiert, um auf diese Weise die Notwendigkeit der Fehlermeldung an die Anwendung kenntlich zu machen. Ein negatives Resultat bedeutet das Auftreten eines Fehlers, beispielsweise ein Abbruch einer Verbindung und dieser Sachverhalt muss der laufenden Anwendung mitgeteilt werden. Die sicherste Ausführbarkeit der Erfindung, in Anbetracht der Fehlermeldung, ist gewährleistet, wenn die Fehlermeldung so früh wie möglich erfolgt. Aus diesem Grund ist es am besten bei jedem Systemaufruf zuerst zu überprüfen, ob negative und bis zu diesem Zeitpunkt nicht gemeldete Resultate vorheriger Aufrufe abgespeichert sind. Wenn diese Überprüfung feststellt, daß ausstehende negative Resultate vorhanden sind, dann werden diese als Rückgabewert bei dem gerade ausführenden Systemaufruf an die Anwendung, in Form eines logisch negativen Wertes zurückgeliefert.

Ein ähnlicher Ablauf bezüglich des Rückgabewertes findet bei einem Resultat statt, das eine Antwort auf eine sich im blockierenden Zustand befindende Anwendung enthält. In diesem Fall wird ebenfalls zuerst überprüft, ob negative und bis zu diesem Zeitpunkt nicht gemeldete Resultate abgespeichert sind. Wenn diese Überprüfung feststellt, daß ausstehende negative Resultate vorhanden sind, dann werden diese als Rückgabewert in Form eines logisch negativen Wertes der Anwendung zurückgeliefert. Im Falle jedoch, daß keine negativen Resultate zu verzeichnen sind, wird der aktuell empfangene Wert an die Anwendung zurückgegeben.

Theoretisch spricht man von Nachrichten in Form von Datenpaketen, die versendet werden, um beispielsweise eine Verbindung aufzubauen. Praktisch kann dies beispielhaft mit einer Programmierschnittstelle, die eine Umwandlung der Programmierbefehle der Anwendungsschicht zu Netzwerkoperationen einer Netzwerkschicht durchführt, realisiert werden. Diese Programmierbefehle können als Systemaufrufe ausgeführt werden, die dem Benutzer ermöglichen, auf die Netzwerkdienste zuzugreifen.

Ein Netzwerkdienst wird formal durch eine Reihe von Dienstelementen oder Netzwerkoperationen gekennzeichnet, über die es dem Anwender möglich ist, den Dienst in Anspruch zu nehmen. Diese Dienstelemente sorgen zum Beispiel dafür, daß der Dienst eine bestimmte Handlung durchführt oder daß dieser auf eine Handlung der Partnerinstanz in bestimmter Weise reagiert. Innerhalb eines Protokollstapels wie beispielsweise TCP/IP oder OSI (Open Systems Interconnection) werden verschiedene Dienstelemente unterschieden. Diese Dienstelemente sorgen dafür, daß ein Dienst eine bestimmte Handlung durchführt. Zum Beispiel wird der Aufbau einer Verbindung mittels des Dienstelementes "Anforderung", die sogenannte request, und der Handlung "Aufbau", das sogenannte CONNECT initiiert. Die entsprechende Nachricht hat in der OSI-Schreibweise das Format CONNECT.request. Wenn diese Anforderung erledigt worden ist, bekommt die Partnerinstanz über eine Anzeige, die sogenannte indication, ein Signal, mit dem eine Aktion angekündigt wird. Beispielsweise erhält die angesprochene Partnerinstanz nach einem CONNECT.request eine CONNECT.indication, dann bedeutet dies, daß der Aufbau einer Verbindung gewünscht ist. Diese Instanz verwendet dann eine Antwortnachricht, die sogenannte response, in diesem Fall ist es CONNECT.response, um auf diese Weise mitzuteilen, ob diese die Verbindungsaufforderung annehmen oder ablehnen will. Die Partnerinstanz, die das ursprüngliche CONNECT.request ausgegeben hat, erfährt mittels einer Bestätigung, der sogenannten CONNECT.confirm, die Bereitschaft der Partnerinstanz. Das angegebene Beispiel bezieht sich auf einen Verbindungsaufbau, der durch CONNECT initiiert wird. Vergleichbare Dienstelemente sind ebenfalls für andere Operationen, wie beispielsweise das Senden der Daten (SEND), definiert, auf die an dieser Stelle nicht genauer eingegangen wird. Das angegebene Beispiel zeigt jedoch, daß die Aufführung der Netzwerkoperationen sehr abstrakt ist. Aus diesem Grund wurde beispielsweise für das Betriebssystem Unix 4.3BSD eine einheitliche Programmierschnittstelle für den systemunabhängigen Zugriff auf Netzwerkdienste, die sogenannte Socket-Schnittstelle eingeführt. Dies gewährleistet eine übersichtlichere Aufführung der Dienstelemente. Die Initiierung einer Nachricht bedeutet dabei im konkreten Sinne die Aufführung von Programmierbefehlen auf der Anwendungsebene. Die Socket-Schnittstelle führt dann die Umwandlung der Programmierbefehle, die im folgenden als Systemaufrufe oder Aufrufe bezeichnet werden, in die Dienstelemente durch. Im weiteren wird diese Programmierschnittstelle zu Zwecken der Erläuterung der Erfindung beispielhaft eingesetzt.

Die Socket-Programmierschnittstelle besteht aus einem Satz von Systemaufrufen, die sich jeweils auf einen sogenannten Socket beziehen. Konzeptionell stellt ein Socket einen Kommunikationsendpunkt dar, an den auf der einen Seite eine Netzwerkverbindung und auf der anderen Seite eine Anwendung angebunden ist. Die wichtigsten Systemaufrufe werden im folgenden näher aufgeführt. Mit einem Systemaufruf socket wird ein neuer Socket erzeugt. Dabei werden als Parameter das Adreßformat, der Typ des Sockets und das Protokoll spezifiziert. Für eine TCP Verbindung wird beispielsweise Internet-Adreßformat, verbindungsorientierter Sockettyp und TCP/IP-Protokoll gewählt. Durch den Systemaufruf connect fordert eine Anwendung eine Verbindung zu einem entfernten Socket im Netz an. Hierbei wird der lokale Socket und die Adresse des entfernten Sockets als Parameter angegeben. Jede Verbindung ist demnach durch ein Paar von Sockets eindeutig gekennzeichnet. Das eigentliche Senden von Daten erfolgt durch den Aufruf send und das Lesen von empfangenen Daten durch den Aufruf recv. Es gibt noch einige weitere Systemaufrufe als die an dieser Stelle beispielhaft erwähnten, welche jedoch hier der Übersichthalber nicht genauer aufgeführt werden.

Die Systemaufrufe werden mittels einer Programmierschnittstelle in die Netzwerkoperationen umgesetzt. Das bedeutet, daß beispielsweise das Ausführen eines Aufrufes connect die Einleitung des Dreiweg-Algorithmus veranlasst. Der Benutzer hat keinen direkten Einfluss auf die Durchführung der Netzwerkoperation. Der Zugriff auf die Netzwerkoperationen kann aber von einem Benutzer mittels der Systemaufrufe gesteuert werden. Um die Modifikation bestehender Anwendungen zu vermeiden, ist es demgemäß Gegenstand der Erfindung zwischen den Systemaufrufen und den Netzwerkoperationen eine zusätzliche Schicht einzubauen, die eine transparente Umsetzung der beiden Arten von Operationen veranlasst, ohne dabei die Implementation der Anwendung zu verändern. Die Aufgabe dieser zusätzlichen Schicht, die im weiteren als Pipelinemodul bezeichnet wird, ist es, die von einer Anwendung erhaltenen Systemaufrufe zu interpretieren und entsprechend aufzuarbeiten.

Die hauptsächliche Aufgabe des Pipelinemoduls liegt jedoch in der Ermittlung des Ausführungsmodus eines Systemaufrufes, das heißt in der Entscheidung, ob ein Ergebnis eines Systemaufrufes unmittelbar an die Anwendung übergeben werden kann, oder ob die Anwendung auf den tatsächlichen Wert der bei einem Server durchgeführten Operation warten muss. Im ersten Fall ist die Rede von einem nicht blockierenden Systemaufruf und im zweiten Fall, bei dem die Anwendung einen tatsächlichen Wert der durchgeführten Operation erwartet, handelt es sich um einen blockierenden Systemaufruf. Dies bedeutet, daß das Pipelinemodul die Unterscheidung zwischen den beiden Arten von Systemaufrufen vornehmen muss, was auf folgende Weise realisiert wird. Wenn der Rückgabewert einen logischen Aussagewert hat, das heißt, wenn bei einer erfolgreich durchgeführt Operation eine 1 für wahr und bei einer nicht erfolgreich realisierten Operation eine 0 für falsch zurückgegeben wird, dann erkennt eine Anwendung, daß es sich um einen nicht-blockierenden Aufruf handelt und dies impliziert einen unmittelbaren Rückgabewert an die Anwendung. Nach Erhalt des Wertes setzt die Anwendung mit der Ausführung der nächsten Operationen fort. Der Status der schwebenden Operation, das heißt der Operation, die an einen Server verschickt wurde, von der aber noch kein tatsächlicher Wert erhalten wurde, wird im Pipelinemodul zwischengespeichert. Das Abspeichern des Status ist notwendig, damit nach Erhalt des tatsächlichen Wertes dieser von dem Pipelinemodul einer sich im schwebenden Zustand befindenden Operation zugeordnet werden kann.

Bei einem blockierenden Systemaufruf, der dadurch gekennzeichnet ist, daß als Rückgabewert des Systemaufrufs Daten und nicht logische Werte erwartet werden, wird von dem Pipelinemodul kein unmittelbarer Wert an die Anwendung zurückgegeben, sondern es wird gewartet bis die tatsächlichen Daten empfangen werden. Währenddessen bleibt die Anwendung blockiert. Außer bei denjenigen Systemaufrufen, die keinen logischen Rückgabewert, sondern Daten zurückliefern, muss von dem System sichergestellt werden, daß zusätzlich der letzte Systemaufruf einer Verbindung ebenfalls in einen blockierenden Zustand versetzt wird, denn nur auf diese Weise wird das Zurückmelden der Ergebnisse der vorher durchgeführten Operationen gewährleistet. Gemäß der Semantik der Socket-Programmierschnittstelle ist es erforderlich die Schließung eines Sockets nach Beendigung seiner Benutzung durchzuführen und dies erfolgt mit Verwendung des Systemaufrufes close oder shutdown, das heißt Systemaufrufe, die in einem blockierenden Modus zu realisieren sind.

Ein Problem der durch die vorliegende Erfindung gewährleisteten Optimierung ist die semantische Änderung der Rückgabewerte bei den nicht-blockierenden Socket-Aufrufen, auf deren tatsächliche Ausführung nicht gewartet wird. Aus diesem Grund ist es erforderlich, daß von dem Pipelinemodul die Kontrolle über die durchgeführten Systemaufrufe mit einer entsprechenden Meldung an die Anwendung sichergestellt wird. Schlägt beispielsweise der Aufruf connect fehl, weil beispielsweise die angesprochenen IP-Adresse aufgrund eines Netzwerkfehlers nicht erreichbar ist, so erfährt das Pipelinemodul von dem entsprechenden Fehler erst nach Empfang des zugehörigen Rückgabewertes und nachdem dieser Aufruf für die Anwendung bereits als erfolgreich abgeschlossen gilt. Der Rückgabewert wird jedoch nach dem Empfang in dem Pipelinemodul abgespeichert und bei einem nächsten Systemaufruf der Anwendung mitgeteilt. Die bevorzugte Realisierung sieht vor, daß die Mitteilung direkt bei dem nachfolgenden Systemaufruf erfolgt. Hiermit wird die möglichst frühe Fehlermeldung gewährleistet. Die Rechnerzeit für die Überprüfung der ausstehenden Fehlermeldungen ist geringer als die Übertragungszeit im GSM, deswegen kann eine Überprüfung der in einem Pipelinemodul vorhandenen Rückgabewerte ohne großen Aufwand realisiert werden.

Eine andere Möglichkeit ist die Meldung der aufgetretenen Fehlern bei dem nächsten Systemaufruf, der im blockierenden Zustand durchgeführt wird.

Diese Ausführungsformen werden von der Implementation abhängen. In beiden Fällen ist es jedoch notwendig, die Ausführung des letzten Systemaufrufes in einem blockierenden Zustand zu realisieren.

Die "verspätete" Fehlermeldung führt bei den bekannten Anwendungen zu keinen Problemen, da diese auch bei dem TCP darauf vorbereitet sind, daß jederzeit Fehler auftreten können.

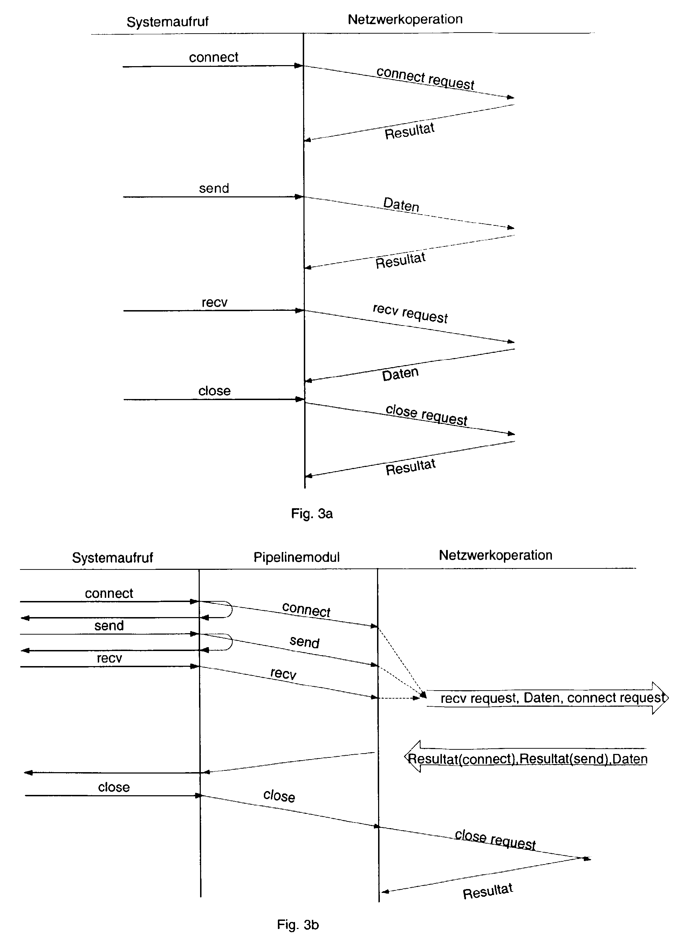

Die Realisierung der Erfindung wird im folgenden anhand eines Ausführungsbeispiels und der Figuren 3a und 3b näher erläutert. Die Figuren stellen einerseits die ausgeführten Systemaufrufe dar, die von einer Anwendung initiiert werden. Dies ist auf der linken Seite der Figuren dargestellt. Die rechten Seiten der Figuren stellen die Netzwerkoperationen dar, mit denen die Durchführung der entsprechenden Systemaufrufe eingeleitet wird.

Das Ausführungsbeispiel gemäß Figur 3a stellt einen Verbindungsaufbau dar, der im Protokoll HTTP 1.0, RFC 1945, im Stand der Technik durchgeführt wird. Bei diesem Protokoll, das zum Abruf von WWW-Seiten eingesetzt wird, wird für jedes Objekt eine separate Verbindung aufgebaut. Eine Verbindung wird gemäß Figur 3a mittels eines ersten Aufrufes connect realisiert. Folglich werden die Daten, zum Beispiel ein Objekt, mittels eines ersten und zweiten Aufrufes, send und recv, angefordert und übertragen und anschließend die Verbindung mittels eines weiteren Aufrufes close abgebaut.

Gemäß der vorliegenden Erfindung wird ein umgewandelter Systemaufruf nicht direkt über ein Übertragungsmedium übermittelt, sondern er wird zuerst dem Pipelinemodul übergeben, das für die Aufarbeitung des Systemaufrufes zuständig ist. Gemäß Figur 3b wird im ersten Schritt ein erster Systemaufruf connect initiiert, der von dem Pipelinemodul als ein nicht-blockierende Systemaufruf interpretiert wird. Dies ist derart dargestellt, daß das Pipelinemodul einerseits die entsprechende Netzwerkoperation an den Server versendet und gleichzeitig der Anwendung unmittelbar ein Resultat bezüglich des Systemaufrufes übergibt ohne auf das tatsächliche Resultat der im Server durchgeführten Operation gewartet zu haben. Die unmittelbare Übergabe des Resultates ist durch einen direkt zurückkehrenden Pfeil gekennzeichnet.

Diese Methode führt dazu, daß die Anwendung nicht in einen blockierenden Zustand versetzt werden muss, der eine ganze RTT (Round Trip Time) dauert, sondern unmittelbar nach Empfang des Resultats mit der Ausführung der folgenden Schritten fortgefahren wird. Gemäß Figur 3b ist es ein weiterer Systemaufruf send, der auf die gleiche Weise wie der erste Systemaufruf connect behandelt wird. Als nächster Systemaufruf erfolgt der Systemaufruf recv. Dieser wird ebenfalls zuerst an das Pipelinemodul übergeben, das diesen Systemaufruf als einen blockierenden Aufruf identifiziert, denn es werden als Rückgabewert Daten erwartet. Aus diesem Grund kann das Pipelinemodul kein unmittelbares Resultat an die Anwendung zurückliefern, sondern es wird auf das Ergebnis des tatsächlich im Server durchgeführten Systemaufrufs gewartet. Aufgrund der Tatsache, daß die Operationszeit eines Rechners im Vergleich zu der Übertragungszeit einer Netzwerkverbindung, insbesondere einer GSM-Verbindung, geringer ist, erfolgt die Versendung der Netzwerkoperationen unmittelbar hintereinander. Aus diesem Grund werden in diesem Fall zwei RTT gespart, denn es wird nicht auf das Resultat der Systemaufrufe connect und send gewartet. Dieses Resultat wird zusammen mit dem Resultat des Systemaufrufes recv zurückgeliefert. Das Verschicken der Netzwerkoperationen direkt hintereinander ist in Figur 3b mittels eines breiteren Pfeiles dargestellt, der die entsprechenden Netzwerkoperationen gemäß der Reihenfolge des Versendens enthält.

Charakteristisch für die Erfindung ist ihre Unabhängigkeit von einer Transportplattform. Denn die Funktionalität ist ebenfalls gewährleistet, wenn ein anderes Transportprotokoll als T/TCP zugrundeliegt. Im Falle von T/TCP werden die beiden Systemaufrufe, connect und send als ein sogenannter sendto Systemaufruf interpretiert. Die Verwendung dieses anderen Protokolls ändert jedoch nichts an der gesamten Ersparnis bezüglich der notwendigen RTTs, deren Anzahl in dem aufgeführten Beispiel von 3 auf 1 reduziert wird.

Im folgenden wird die erfindungsgemäße Vorrichtung gemäß des Patentanspruches 16 näher erläutert (ohne Figur). Bei der erfindungsgemäßen Vorrichtung zu einer schnellen Durchführung von Netzwerkoperationen über ein Netzwerk mit hohen Verzögerungszeiten wird für einen Systemaufruf mit einem Ermittlungselement der Ausführungsmodus des Systemaufrufes ermittelt. Hierbei wird zwischen einem blockierenden und einem nicht-blockierenden Zustand unterschieden. Mit Hilfe von Umwandlungsmitteln wird ein Systemaufruf in eine Netzwerkoperation umgewandelt. Der Sender versendet die Netzwerkoperationen an eine kommunizierende Einheit. Die Resultate, der bei einer Kommunikationseinheit durchgeführten Netzwerkoperation werden bei der die Netzwerkoperation initiierenden Einheit mit einem Empfänger empfangen. Die empfangenen Resultate werden in einem Speicher gespeichert und mit einem Bearbeitungselement gemäß des enthaltenen Wertes entsprechend bearbeitet. Gemäß Patentanspruch 18 wird eine Unterscheidung zwischen negativen und positiven Werten vorgenommen.

Im Falle eines nicht-blockierenden Systemaufrufes wird nach Auslösung der entsprechenden Netzwerkoperation auf das Ergebnis des in einer Partnerinstanz ausgeführten Systemaufrufes gewartet ohne hierbei die Ausführung der Anwendung zu blockieren. Dies wird mit Elementen zur Realisierung eines solchen Zustandes realisiert.

Die Realisierung der Erfindung basiert darauf, daß ein zusätzliches Modul, das oben genannte Pipelinemodul, unterhalb der Socket-Programmierschnittstelle vorgesehen wird. Aus diesem Grund muss die Implementation der Erfindung auf der Ebene des Betriebssytems realisiert werden unter Berücksichtigung der unterschiedlichen Ausführungsformen der verschiedenen Betriebssysteme. Die Grundidee der Socket-Programmierschnittstelle ist jedoch ihre Protokollunabhängigkeit. Deswegen wird in den meisten Betriebssystemen eine interne Software-Schnittstelle mit dem Zweck der Einbindung eines zusätzlichen Protokollmodules zu der Socket-Programmierschnittstelle vorgesehen, was die Realisierung der Erfindung erleichtert.

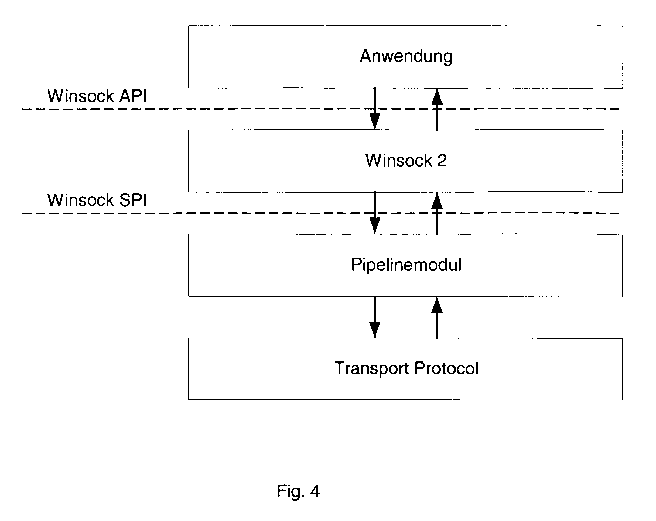

Die Implementation der Erfindung wird im folgenden anhand des Betriebssystems Windows als Beispiel und der Figur 4 näher erläutert.

Die Figur 4 stellt einen Protokollstapel mit den involvierten Instanzen dar. Die direkt benachbarten Instanzen, Anwendung, Winsock2, Pipelinemodul und Transport Protokoll kommunizieren miteinander, was durch die Pfeile gekennzeichnet ist. Die Kommunikation der benachbarten Ebenen erfolgt durch eine definierte Software-Schnittstelle, beispielsweise erfolgt die Kommunikation der Instanz Anwendung und der Instanz Winsock 2 durch die Socket-Programmierschnittstelle, die im Betriebssystem Windows den Namen Winsock API trägt. Die Software-Schnittstelle Winsock SPI (Service Provider Interface), die in "Windows Sockets 2 Service Provider Interface", Revision 2.2.2, Microsoft, August 1997 näher beschrieben ist, wird zur Kommunikation zwischen der Winsock 2 Ebene und dem darunter implementierten Protokoll, in diesem Fall dem Pipelinemodul, benutzt.

## Patentansprüche

1. Verfahren zu einer schnellen Durchführung von Netzwerkoperationen über ein Netzwerk mit hohen Verzögerungszeiten mit einem Modul für eine Bearbeitung eines Systemaufrufes einer Anwendungsebene und für eine Auslösung von Netzwerkoperationen einer Netzwerkebene mit folgenden Schritten,
- Übergabe des Systemaufrufes an das Modul,
- Ermittlung eines Ausführungsmodus des Systemaufrufes mit Unterscheidung zwischen einem blockierenden und einem nicht-blockierenden Ausführungsmodus,
- unmittelbare Rückgabe eines logischen Wertes an die Anwendungsebene und Auslösung einer Netzwerkoperation im Falle eines nicht-blockierenden Ausführungsmodus.

2. Verfahren nach Anspruch 1 bei dem die Netzwerkoperation zu einer Partnerinstanz übertragen wird, die mit einer die Netzwerkoperation auslösenden Einheit in Kommunikation steht.

3. Verfahren nach Anspruch 2 bei dem die in der Partnerinstanz empfangene Netzwerkoperation in eine Operation umgewandelt wird, diese durchgeführt wird und ein Resultat der Operation an die Einheit, die die Netzwerkoperation ausgelöst hat, zurückgesendet wird.

4. Verfahren nach einem der Ansprüche 1 bis 3 bei dem eine Bearbeitung des empfangenen Resultates einer Operation in dem Modul realisiert wird.

5. Verfahren nach einem der Ansprüche 1 bis 4 bei dem ein nicht-blockierender Systemaufruf nach Auslösung der Netzwerkoperation in einen Zustand versetzt wird, in dem auf ein tatsächliches Ergebnis des in einer Partnerinstanz ausgeführten Systemaufrufes gewartet wird ohne Blockierung der Ausführung der aufrufenden Anwendung.

6. Verfahren nach einem der Ansprüche 3, 4 oder 5 bei dem die empfangenen Resultate sich auf einen nicht-blockierenden Zustand beziehen und einen logischen Wert haben oder diese ein Resultat eines in der Partnerinstanz durchgeführten blockierenden Systemaufrufes sind.

7. Verfahren nach einem der Ansprüche 3 bis 6 bei dem die empfangenen Resultate bei einem nicht-blockierenden Ausführungsmodus zwischengespeichert werden.

8. Verfahren nach einem der Ansprüche 1 bis 7 bei dem die logischen Werte entweder einen logisch positiven oder einen logisch negativen Aussagewert haben.

9. Verfahren nach Anspruch 8 bei dem die logisch negativen Ergebnisse bei der Durchführung des folgenden Systemaufrufes der Anwendung in Form eines logisch negativen Rückgabewertes mitgeteilt werden.

10. Verfahren nach einem der Ansprüche 3 bis 9 bei dem, bei einem nicht-blockierenden Systemaufruf, im Falle von nicht ausstehenden negativen Resultaten vorheriger Aufrufe, immer ein logisch positiver Wert an die Anwendung zurückgeliefert wird.

11. Verfahren nach einem der Ansprüche 1 bis 10 bei dem der letzte Systemaufruf einer Verbindung in einen blockierenden Zustand gesetzt wird, um ein Zurückmelden der Ergebnisse der vorher durchgeführten Operationen zu gewährleisten.

12. Verfahren nach Anspruch 1 bei dem die blockierenden Systemaufrufe auf eine bekannte Weise realisiert werden, in dem auf das Resultat des in einer Partnerinstanz ausgeführten Systemaufrufes gewartet wird.

13. Verfahren nach einem der Ansprüche 1 bis 12 bei dem die Systemaufrufe Socket-Systemaufrufe sind.

14. Verfahren nach Anspruch 13 bei dem die Socket-Systemaufrufe eine Programmierschnittstelle für ein Betriebssystem bilden.

15. Verfahren nach Anspruch 1 bei dem das Modul ein Pipelinemodul ist.

16. Vorrichtung zu einer schnellen Durchführung von Netzwerkoperationen über ein Netzwerk mit hohen Verzögerungszeiten mit einem Modul für eine Bearbeitung von Systemaufrufen einer Anwendungsebene und für eine Auslösung von Netzwerkoperationen einer Netzwerkebene mit,
- einem Ermittlungselement zur Ermittlung des Ausführungsmodus eines Systemaufrufes,
- Umwandlungsmitteln, das den Systemaufruf in Netzwerkoperationen umwandelt,
- einem Sender zum Versenden von Netzwerkoperationen,
- einem Empfänger zum Empfangen von Resultaten der durchgeführten Netzwerkoperation,
- einem Speicher zum Speichern von empfangenen Resultaten,
- einem Bearbeitungselement zur Bearbeitung der empfangenen Resultate.

17. Vorrichtung nach Anspruch 17 mit Elementen zur Realisierung eines Zustandes, in dem nach Auslösung der Netzwerkoperation auf das Ergebnis des in einer Partnerinstanz ausgeführten Systemaufrufes gewartet wird ohne Blockierung der Ausführung der aufrufenden Anwendung.

18. Vorrichtung nach Anspruch 18 bei der das Mittel zur Bearbeitung der empfangenen Resultate die Unterscheidung zwischen negativen, positiven Werten vornimmt.
